Europäisches Patentamt

(19) European Patent Office

Office européen des brevets

(11) Veröffentlichungsnummer: **0 163 176**
**B1**

(12) **EUROPÄISCHE PATENTSCHRIFT**

(45) Veröffentlichungstag der Patentschrifft:
21.03.90

(51) Int. Cl. 5: **G 01 N 21/21**

(21) Anmeldenummer: **85105624.2**

(22) Anmeldetag: **08.05.85**

(54) **Ellipsometrisches Verfahren sowie ellipsometrische Vorrichtung zur Untersuchung der physikalischen Eigenschaften von Proben bzw. Oberflächenschichten von Proben.**

(30) Priorität: **24.05.84 DE 3419463**

(43) Veröffentlichungstag der Anmeldung:
**04.12.85 Patentblatt 85/49**

(45) Bekanntmachung des Hinweises auf die Patenterteilung:
**21.03.90 Patentblatt 90/12**

(84) Bennante Vertragsstaaten:
**AT BE CH FR GB IT LI NL SE**

(56) Entgegenhaltungen:
**DE-A-2 618 953**

(73) Patentinhaber: **SAGAX Instrument AB**
**Box 7003**
**S-172 07 Sundbyberg (SE)**

(72) Erfinder: **Björk, Nils Arvid Norman**
**Kometvägen 17**
**S-18 333 Täby (SE)**
Erfinder: **Sandström, Erland Torbjörn**
**Muraregatan 13B**
**S-43134 Mölndal (SE)**
Erfinder: **Stenberg, Johan Emanuel**
**Hedelundsvägen 5**
**S-41743 Göteborg (SE)**
Erfinder: **Stiblert, Lars Bertil**
**Övre Besvärsgatan 4**
**S-41129 Göteborg (SE)**

(74) Vertreter: **Haft, Berngruber, Czybulka**
**Postfach 14 02 46 Hans-Sachs-Strasse 5**
**D-8000 München 5 (DE)**

LIBERGRAF, STOCKHOLM 1990

EP 0 163 176 B1

## Beschreibung

Die Erfindung bezieht sich auf ein ellipsometrisches Verfahren nach dem Oberbegriff des Anspruchs 1 und eine ellipsometrische Vorrichtung nach dem Oberbegriff des Anspruchs 2 zur Untersuchung physikalischer Eigenschaften von Proben bzw. Oberflächenschichten von Proben.

Unter Ellipsometrie versteht man eine umfassende Bezeichnung für verschiedene Verfahren zur Untersuchung physikalischer Eigenschaften von Proben unter Zuhilfenahme deren Eigenschaften die Polarisation eines polarisierten Lichtstrahls zu ändern. Im Prinzip wird dabei ein Lichtstrahl mit bekanntem Polarisationszustand an der Probe reflektiert oder durch die Probe hindurchgeschickt. Nach der Reflexion an der Probe bzw. nach dem Hindurchtreten des Lichts durch die Probe lassen sich die physikalischen Eigenschaften der Probe aus der Änderung der Polarisation unter Anwendung optischer Berechnungen ermitteln.

Bei der Reflexionsellipsometrie besitzt die Probe eine reflektierende Oberfläche, auf die der Lichtstrahl mit einem spitzen Einfallswinkel auftrifft. Aus den ellipsometrischen Ergebnissen lassen sich der Brechungsindex und Absorptionskoeffizient des Oberflächenmaterials der Probe ermitteln. Wenn die Probe mit einem dielektrischen Film beschichtet ist, können die Dicke und der Brechungsindex dieses dielektrischen Filmes bestimmt werden. Die Reflexionsellipsometrie ist die empfindlichste und genaueste Methode, um derartige Filme bzw. Schichten zu messen.

Anstelle des reflektierten Lichtstrahls kann auch der durch die Probe hindurchgetretene Lichtstrahl analysiert werden. Diese Methode nennt man Transmissionsellipsometrie.

Die gleiche Technik, welche bei der Messung der Änderung der Polarisation bei der Transmissionsellipsometrie zur Anwendung kommt, kann verwendet werden zur Untersuchung von Masse-Eigenschaften durchsichtiger Stoffe, beispielsweise der Doppelbrechung von Kristallen oder der optischen Rotation einer Zuckerlösung. Letzteres wird in herkömmlicher Weise Polarometrie genannt, fällt jedoch unter den allgemeinen Oberbegriff Ellipsometrie.

Der Einfachheit halber wird im folgenden Teil der Beschreibung hauptsächlich auf die Reflexionsellipsometrie Bezug genommen, jedoch treffen – falls es nicht anderweitig ausgeführt wird die Ausführungen auch auf die Transmissionsellipsometrie und Polarometrie zu.

Bei der Ellipsometrie beeinflussen die interessierenden physikalichen Größen der Probe gleichzeitig die relative Intensität und den Gangunterschied der beiden Polarisationskomponenten des Lichtstrahls. Da äußere Einflüsse auf diese beiden Polarisationskomponenten in gleichem Ausmaß einwirken, ist die Ellipsometrie äußerst unempfindlich gegen solche äußeren Einflüsse. Hieraus erklärt sich auch die außerordentliche Genauigkeit ellipsometrischer Meßverfahren in herkömmlichen Laboreinrichtungen.

Die Ellipsometrie ist eine zu hohem Standard entwickelte Technik und es gibt zahlreiche Veröffentlichungen, wobei in R.N.A. Azzam and N.M. Bashara "Ellipsometry and polarize Light", North Holland Publishing Co., New York 1977 die verschiedenen Aspekte der Ellipsometrie beschrieben sind. In der Ellipsometrie wird insbesondere unterschieden im Hinblick auf das verwendete Instrument (das Ellipsometer) und die Verfahren zur Gewinnung und Auswertung der Meßdaten.

Ein Ellipsometer besteht im wesentlichen aus einer Lichtquelle, welche polarisiertes Licht ausstrahlt, aus der Probe und einem Analysator, welcher die Polarisation des Lichts nach seiner Reflexion an der Probe bzw. nach dem Durchtritt durch die Probe analysiert. Im einzelnen werden beim Aufbau des Ellipsometers die Lichtquelle und ein Detektor verwendet sowie zwei Polarisatoren, von denen einer nahe der Lichtquelle angeordnet ist und in herkömmlicher Weise als Polarisator bezeichnet wird und einer in der Nähe der Analysiereinrichtung angeordnet ist und mit Analysator bezeichnet wird. Zwischen dem Polarisator und dem Analysator befindet sich die Probe und es können ein oder zwei die Polarisation modifizierende bzw. ändernde Einrichtungen, d.h. Polarisationsmodulatoren vorgesehen sein. Diese Einrichtungen können Polarisatoren sein, die eine Teilpolarisation erzeugen, oder doppelt brechende Vorrichtungen (sog. Kompensatoren) oder optische Dreheinrichtungen und/oder geometrische Dreheinrichtungen sein. Wenn beispielsweise der Polarisator relativ gegenüber der Probe verdreht wird, handelt es sich um eine geometrische Rotation. Die Unterschiede zwischen den einzelnen Ellipsometern ergeben sich aus der Wahl der den Polarisationszustand ändernden Einrichtung. Der Grundaufbau eines Ellipsometers mit einem Kompensator ($\lambda$/4-Platte) als den Polarisationszustand der Strahlung ändernde Einrichtung ist beispielsweise beschrieben in Journal of Physics E; Scientific instruments, Band 6, Nr. 5, Mai 1973 von W. E. J. Neal et al: "Ellipsometry and its applications to surface examination", Seiten 409 u.f., insbesondere Seite 410.

Aufgrund des gewählten Aufbaus besitzen die Ellipsometer unterschiedliche Eigenschaften, beispielsweise im Hinblick auf Genauigkeit, hohe Meßgeschwindigkeit sowie Verwendbarkeit für den Betrieb mit mehreren Wellenlängen.

Aufgrund der Richtungsunabhängigkeit der optischen Gesetze kann die Reihenfolge der optischen Bauteile zwischen den beiden Polarisatoren vertauscht werden. Die Funktionsweise des Gesamtinstruments bleibt dann die gleiche, wobei jedoch der Zustand der optischen Bauteile beim Analysieren der Meßdaten in Betracht gezogen werden muß.

Die ellipsometrischen Verfahren zerfallen im wesentlichen in die photometrische Ellipsometrie und in die Null-Ellipsometrie. Bei der Null-Ellipsometrie wird die Änderung des Polarisationszustands, welche durch die Probe bewirkt wird, kompensiert durch entsprechende Einstellung des Polarisationsmodulators, so daß der Lichtstrahl durch den Analysator gelöscht ist. Die Einstellung auf eine minimale empfangene Intensität kann entweder manuell oder automatisch eingestellt werden. Das Meßergebnis ist dann die Stellung des Polarisationsmodulators bei Löschung. Ein derartiges Verfahren ist beispielsweise beschrieben in der veröffentlichten europäischen Patentanmeldung 80 101 993.6 (Veröffentlichungs-Nr. 0 019 088).

Bei der photometrischen Ellipsometrie werden die den Polarisationszustand ändernden Einrichtungen in vorbestimmter Weise geändert und die Lichtintensität, welche der Detektor empfängt, wird gemessen für jede Einstellung des Polarisationsmodulators. Die ellipsometrischen Daten für die Probe werden dann unter Verwendung mathematischer Modelle für das jeweilige Instrument errechnet.

Die Einstellung bzw. Verstellung des Polarisationsmodulators kann durch drehbare Modulatorteile erzielt werden, wobei einer oder beide Polarisationsmodulatoren kontinuierlich durch Drehung seiner optischen Elemente, welche rotationssymmetrisch aufgebaut sind, der Polarisationszustand der Strahlung kontinuierlich geändert wird. Hierbei kommt häufig die Drehung des Polarisators oder eines Kompensators mit konstanter Drehzahl um eine Drehachse zur Anwendung, die parallel zum Strahlengang ist, und die Wellenform des empfangenen Signals wird dabei gemessen.

Ein weiteres photometrisches Ellipsometrieverfahren besteht darin, daß, zur Änderung des Polarisationszustandes ein oder mehrere elektrooptische Polarisationsmodulatoren verwendet werden, deren Modulationseigenschaften entsprechend gesteuert sind und dabei die Wellenform gemessen wird.

Ferner sind ellipsometrische Strahlteilungsverfahren bekannt, bei denen der Strahl nach der Reflektion an der Probe bzw. nach dem Durchtritt durch die Probe in zwei oder mehrere Lichtstrahlen aufgeteilt wird und die aufgeteilten Strahlen von verschiedenen Detektoren gemessen werden. Für die aufgeteilten Strahlen sind verschiedene Polarisationsmodulatoren vorgesehen. Aus der Kenntnis der Eigenschaften der Polarisationsmodulatoren und den gemessenen Intensitäten lassen sich die Eigenschaften der Probe ermitteln.

Bei der Null-Ellipsometrie benötigt man einen gegenüber der Strahlung empfindlichen Detektor, jedoch keinen quantitativ messenden Detektor, d.h. es genügt das bloße Auge der Bedienungsperson, wobei hier zwar eine relativ hohe Genauigkeit erzielt wird, jedoch ein langsamer Meßbetrieb inkauf genommen wird. Die Genauigkeit hängt ab von der Ablesegenauigkeit für die Einstellungen des Polarisationsmodulators. Hierbei handelt es sich in vielen Fällen um mechanisch gedrehte optische Elemente. Die photometrischen Ellipsometrieverfahren hängen in ihrer Genauigkeit von der Meßgenauigkeit des Detektors, der die Lichtintensität empfängt, ab. Bei durch Drehung verstellbaren Bauteilen des Ellipsometers ist es erforderlich die Winkeleinstellung dieser Bauteile sowie die empfangene Lichtintensität äußerst genau zu ermitteln und zu messen. Da die Intensitäten zu verschiedenen Zeiten gemessen werden, beeinträchtigen Schwankungen der Lichtquelle das Meßergebnis. Bei dem Strahlteilungsverfahren wirken sich Änderungen der Intensität der Lichtquelle zwar nicht nachteilig aus, jedoch beeinträchtigen Änderungen der Empfindlichkeit zwischen den einzelnen Detektoren und Empfängern das Meßergebnis.

Aufgabe der Erfindung ist es, ein Verfahren nach dem Oberbegriff des Anspruchs 1 und eine Vorrichtung nach dem Oberbegriff des Anspruchs 2 zu schaffen, welche mit gleichbleibendem optischen und elektronischen Aufbau für ein breites Band von unterschiedlichen ellipsometrischen Messungen Anwendung finden können.

Diese Aufgabe wird gemäß der Erfindung verfahrensmäßig durch die im Anspruch 1 angegebenen Merkmale und vorrichtungsmäßig durch die im Anspruch 2 angegebenen Merkmale gelöst.

Durch die Erfindung wird ein neues photometrisches Ellipsometrieverfahren und ein neues photometrisches Ellipsometer geschaffen, bei denen ein Polarisationsmodulator hinsichtlich seiner die Polarisation des Lichtstrahls beeinflussenden Eigenschaften in Form von unterschiedliche optische Eigenschaften aufweisenden reflektierenden Flächen, auf die die Strahlung mit spitzem Einfallswinkel, insbesondere mit einem Einfallswinkel von 45° bis 80°, auftrifft, in diskreten vorbestimmten Stufen geändert wird und jeweils die den diskreten Stufenwerten entsprechenden Intensitäten, welche von einem Detektor empfangen werden, gemessen werden. Die Polarisationseigenschaften der Probe werden aus diesen Intensitäten und aus der Kenntnis der stufenweise voneinander abweichenden diskreten Einstellwerte des Polarisationsmodulators errechnet.

Beim erfindungsgemäßen Ellipsometer kommen zwei oder mehrere Polarisationsmodulatorelemente zum Einsatz mit voneinander abgestuften unterschiedlichen vorbestimmten, die Polarisation des elliptischen Lichts beeinflussenden Eigenschaften zur Anwendung. Diese Polarisationsmodulationselemente sind an räumlich unterschiedlichen Stellen des Polarisationsmodulators angeordnet und werden nacheinander in den Strahlengang gebracht. Diese Polarisationsmodulatorelemente sind derart ausgebildet, daß durch diese bei fest eingestelltem Polarisator und Analysator während des Meßvorgangs an einer Probe vom Detektor abgestufte unterschiedliche Intensitäten empfangen und gemessen werden.

Bei den Polarisationsmodulatorelementen handelt es sich um reflektierende Flächen, die mit einem homogen optisch isotropen Medium beschichtet sind, wobei die Schichtdicken und/oder Brechungsindizes der isotropen Medien der einzelnen Polarisationsmodulatorelemente voneinander sich unterscheiden. Auf jeder der reflektierenden Flächen können eine oder mehrere Schichten vorhanden sein. Die Polarisationsmodulatorelemente können auf einem drehbaren Träger angeordnet sein, der die einzelnen Polarisationsmodulatorelemente in den Strahlengang bringt. Die Drehachse verläuft dabei senkrecht zu den reflektierenden Flächen der Polarisationsmodulatorelemente.

Es ist jedoch auch möglich, anstelle der Drehbewegung, mit welcher die einzelnen Polarisationsmodulatorelemente in den Strahlengang gebracht werden, durch Verschieben der in einer Reihe angeordneten Polarisationsmodulatorelemente oder durch eine hin- und hergehende Bewegung diese in den Strahlengang zu bringen.

Im Unterschied zum herkömmlichen photometrischen Ellipsometrieverfahren und photometrischen Ellipsometern erfolgt bei der Erfindung eine stufenweise Änderung des Polarisationszustandes des polarisierten Lichts zwischen Polarisator und Analysator, wobei der jeweilige diskrete Polarisationszustand solange beibehalten wird wie das Polarisationsmodulatorelement sich im Strahlengang des polarisierten Lichts befindet. Die zu jedem Polarisationsmodulatorelement gehörige Intensität wird gemessen. Aus den bekannten Werten bzw. Einstellungen der Polarisationsmodulatorelemente und den zugehörigen Intensitäten lassen sich die Polarisationseigenschaften der Probe ermitteln. Aus diesen lassen sich wiederum insbesondere der Brechungsindex und der Absorptionskoeffizient von Oberflächenschichten der Probe bestimmen. Wird der Polarisationszustand geändert beim Durchstrahlen der Probe, lassen sich Stoffeigenschaften des durchsichtigen Probenmaterials, beispielsweise doppelbrechende Eigenschaften, bestimmen.

Die Polarisationsmodulatorelemente können aus poliertem Silizium bestehen, wobei die polierten Flächen mit dielektrischen Filmen unterschiedlicher Dicke und/oder unterschiedlichem Brechungsindizes ausgestattet sind. An den polierten Flächen wird beim Meßvorgang das polarisierte Licht, mit welchem die Probe untersucht wird, reflektiert. Die Polarisationseigenschaften einer derartigen, ähnlich einem Kompensator wirkenden isotropen Oberfläche hängen lediglich vom Einfallswinkel und von der Wellenlänge des Lichtes, mit welchem die Probe untersucht wird, ab. Weder der Einfallswinkel noch die Wellenlänge des Lichts ändern sich, während eine Fläche eines Polarisationsmodulatorelements vom Licht beleuchtet wird.

Neben der Vielfalt der Anwendungsmöglichkeiten bei unterschiedlichen ellipsometrischen Messungen ohne Änderung des optischen oder elektronischen Aufbaus, weist die Erfindung noch folgende Vorteile auf. Wenn vier unterschiedliche Polarisationsmodulatorelemente, insbesondere solche mit reflektierenden Flächen, verwendet werden, läßt sich eine vollständige Stokes-Vektor-Ellipsometrie durchführen. Aus der Messung der vier Intensitäten I1 bis I4 läßt sich der Stokes-Vektor des von der Probe kommenden Lichtstrahls durch folgende Matrixgleichung ermitteln.

$$\overline{S} = \overline{I} M$$

Die Matrix M errechnet sich aus den bekannten Eigenschaften der vier Polarisationsmodulatorelemente. Damit M existiert ist es erforderlich, daß die Matrix M eine von Null abweichende Determinante aufweist. Diese Bedingung läßt sich leicht durch geeignete Auswahl der Polarisationsmodulatorelemente, insbesondere der Oberflächenschichten auf den reflektierenden Oberflächen der wie Kompensatoren wirkenden Polarisationsmodulatorelemente erzielen.

Ein Lichtstrahl läßt sich auf verschiedene Art und Weise beschreiben. Für einen monochromatischen polarisierten Lichtstrahl gilt als Beschreibung des momentanen elektrischen Feldvektors die folgende Gleichung:

$$E = (E_x \hat{x} + E_y \hat{y}) e^{-j(\omega t - kz + \theta)}$$

In dieser Gleichung bedeuten $E_x$ und $E_y$, komplexe Amplitudenwerte, $\hat{x}$ und $\hat{y}$ kartesische Basisvektoren in X- und Y-Richtung,

z die Ausbreitungsrichtung, $\omega$ die Winkelfrequenz, k eine Ausbreitungskonstante und $\theta$ einen konstanten Phasenwinkel.

Die Gesamtintensität läßt sich ausdrücken durch

$$I = |E_x|^2 + |E_y|^2$$

Die Polarisation läßt sich darstellen durch die komplexe Größe

$$\rho = Ex/Ey$$

Der Phasenwinkel $\theta$ ist unbestimmt und kann für einen einzelnen Lichtstrahl nicht gemessen werden.

Im allgemeinen Fall einer endlichen Bandbreite und nicht vollständig polarisierten Lichts ist noch eine Größe P zu berücksichtigen, die den Polarisationsgrad, d.h. das Verhältnis der Intensität des polarisierten Anteils zur Gesamtintensität angibt. Diese Strahlung läßt sich physikalisch durch den Stokes-Vektor beschreiben.

$$\overline{S} = (I, S_1, S_2, S_3)$$

Die vier Vektorelemente geben das Ergebnis von vier verschiedenen Intensitätsmessungen, welche am Lichtstrahl durchgeführt sind, wieder. Der Stokes-Vektor kann auf I, $\rho$ und P transformiert werden. Das Ellipsometer mißt die Änderung von $\rho$ bzw. $|\rho|$, welche durch die Probe verursacht ist. In photometrischen Ellipsometern läßt sich I ebenfalls ermitteln. Vollständige Stokes-Vektor-Ellipsometer geben den vollständigen Stokes-Vektor S bzw. I, $\rho$ und P an.

Die Umwandlung einer Änderung von $\rho$ in Werte der Dicke und des Brechungsindex erfolgt durch Vergleich mit einer Wertetabelle, die aufgrund optischer Theorie errechnet und gespeichert ist, in einem Online-Digital-Computer.

Das Instrument verwendet dabei alle aus dem Lichtstrahl verfügbaren Informationen, nämlich die Intensität I, die komplexe Größe der Polarisation p und den Polarisationsgrad P. In vielen Anwendungsfällen der Ellipsometrie ist der Polarisationsgrad 1. Der Meßwert des Polarisationsgrades kann hierbei verwendet werden zur Überwachung des Instruments bei der Fehlerermittlung und bei der Ermittlung von Widersprüchlichkeiten in der Messung; beispielsweise können Inhomogenitäten der Proben an der überprüften Oberfläche festgestellt werden. In anderen Anwendungsfällen ermöglicht die Messung des Polarisationsgrades P die Untersuchung von unbekannten Oberflächen, z. B. von rauhen Oberflächen.

Wenn eine bestimmte Geometrie der Anordnung der optischen Bauteile des Ellipsometers zueinander in der Weise verwendet wird, daß auf die als Kompensatoren wirkenden Oberflächen der Polarisationsmodulatorelemente und die Probe das Licht mit gleichem Einfallswinkel einfällt und die Einfallsebenen senkrecht zueinander liegen, läßt sich durch entsprechende Einstellung des Polarisators und Analysators ein Zustand erzielen, bei dem der Detektor kein Licht empfängt, wenn die als Kompensator wirkende Oberfläche des Polarisationsmodulationselements mit der Probenoberfläche übereinstimmt. Ein derartiger Zustand wird auch erzielt bei dem aus der veröffentlichten europäischen Patentanmeldung 80 102 993.6 (Veröffentlichungs-Nr. 0 019 088) bekannten Null-Ellipsometer. Eine mathematische Ermittlung der Oberflächeneigenschaften erübrigt sich dann, weil durch das als Bezugsoberfläche wirkende Polarisationsmodulatorelement direkt die interessierenden physikalischen Parameter angegeben sind.

Wenn die gleiche Geometrie mit zwei oder mehr Polarisationsmodulatorelementen, insbesondere mit beschichteten reflektierenden Oberflächen mit unterschiedlichen Schichtdicken verwendet wird und die Oberflächen der Modulationspolarisatorelemente und der Probe von gleichem Typ sind, ist es möglich auf einfache Weise die Schichtdicke auf der Probe aus den gemessenen Intensitäten zu ermitteln. Der mathematische Aufwand ist hierbei bedeutend geringer als bislang üblich. Dieser Vorteil ergibt sich insbesondere dann, wenn die Oberflächen der Polarisationsmodulatorelemente und der Probe innerhalb eines relativ schmalen Dickenbereichs liegen. In diesem Fall ergibt sich die empfangene Intensität $I_d$ nach folgender Formel:

$$I_d = I_1 (d_t - d_c)^2 + I_0$$

Hierbei bedeuten $d_t$ die unbekannte Schichtdicke auf der Probe, $d_c$ die Schichtdicke auf der wie ein Kompensator wirkenden reflektierenden Oberfläche und $I_1$ und $I_0$ sind unbekannte Instrumentfaktoren. Aus drei Wertepaaren für $I_d$ und $d_c$ lassen sich die unbekannten Konstanten ermitteln, ohne daß hierzu die rechnerische Kompliziertheit der herkömmlichen vollständigen Ellipsometrie erforderlich ist.

Bei einem größeren Dickenbereich ergibt sich die empfangene Intensität durch die folgende Formel, wobei in diese ein Korrekturfaktor $c (d_c)$ eingesetzt ist, um Änderungen in der gesamten reflektierten Intensität zu berücksichtigen.

$$I_d = I_1 c(d_c)(d_t - d_c)^2 + I_0$$

Eine große Anzahl an Fehlerquellen verschwinden, wenn die Probe und die Polarisationsmodulatorelemente bei der im vorstehenden angegebenen speziellen Geometrie fast identisch sind, insbesondere wenn für die Polarisationsmodulatorelemente beschichtete reflektierende Oberflächen, welche ähnlich einem Kompensator wirken, verwendet werden, die fast identisch zur zu untersuchenden Probenoberfläche sind. Es können dann äußerst genaue Messungen durchgeführt werden. Dies ist von höchster Bedeutung bei der Messung äußerst dünner Filme, wobei die Dicke der zu messenden dünnen Filme geringer sein kann, als die Schichtdicke des homogenen optisch isotropen Mediums auf der reflektierenden Oberfläche des jeweiligen Polarisationsmodulatorelements. Aus den unterschiedlichen gemessenen Intensitäten läßt sich dann durch Interpolation die auf der Probe befindliche Schichtdicke ermitteln.

Mit der bislang bekanntgewordenen Null-Ellipsometrie ist es schwierig bei der Messung von äußerst dünnen Filmen die gewünschte Genauigkeit zu erzielen. Dies liegt daran, daß derartig dünne Filme in der Größenordnung von einigen Angström nicht stabil genug sind, daß sie als Referenzoberflächen, beispielsweise bei der aus der veröffentlichten Patentanmeldung 80 101 993.6 (Veröffentlichungs-Nr. 0 019 088) bekannten Null-Ellipsometrie, Verwendung finden könnten. Bei vorliegender Erfindung jedoch können die Schichtdicken für die jeweiligen auf den reflektierenden Flächen der Polarisationsmodulatorelemente befindlichen homogenen optisch isotropen Medien so dick ausgebildet sein, daß sie stabile Filme bilden, wobei aufgrund der vorstehend genannten Interpolation bei der Auswertung der verschiedenen gemessenen Intensitäten keine Äquivalenz bzw. Gleichheit zwischen der Probenoberfläche und der Oberfläche des Polarisationsmodulatorelements vorhanden sein muß.

Das bei der Erfindung zur Anwendung kommende photometrische Ellipsometer ist einfacher ausgebildet als herkömmliche Ellipsometer. Es kommt mit nur einem Detektor und dementsprechend mit einem Verstärker für das Detektorsignal aus. Eine genaue Steuerung der Winkeleinstellung drehbarer Bauteile ist nicht erforderlich. Außerdem benötigt das Ellipsometer keine elektrooptisch modulierten Bauteile.

Die Eigenschaften des bei der Erfindung zur Anwendung kommenden Polarisationsmodulators sind schrittweise konstant. Durch Integration des Detektorstroms während einer jeweiligen "konstanten Periode" läßt sich das Detektorrauschen verringern. Es ist nicht erforderlich, eine rasche Abtastung und entsprechende Datenumwandlung durchzuführen.

Aus den in den Ansprüchen 9 bis 11 angegebenen Merkmalen ergibt sich, daß weder vollpolarisiertes noch monochromatisches Licht verwendet werden müssen. Hierdurch wird die vielfältige Verwendbarkeit des Ellipsometers noch erhöht. Auch bei der Wahl der geeigneten Lichtquelle ist man äußerst flexibel. Diese kann auf verschiedene Wellenlängen eingestellt sein und im Zusammenhang mit einer Wellenlängenabtastung verwendet werden. Die Lichtquelle kann auch vollständig frei von Transmissionsoptiken sein. Für schwierige Spektralbereiche, wie beispielsweise Vakuum-UV oder entferntes IR kann eine Einfachreflektion-Breusterwinkel-Polarisation zur Anwendung kommen, da die polarisierende Wirkung unkritisch ist und der Polarisator und Analysator während des Meßvorgangs nicht verstellt werden.

Aus der Unveränderlichkeit des vom Detektor empfangenen Lichts für bestimmte endliche Zeitperioden ergibt sich die Möglichkeit, den Detektor durch ein Parallel-Empfangsspektrometer zu ersetzen. Dieses dispergiert verschiedene Wellenlängen des Lichts zu einem Spektrum und empfängt dieses Spektrum mit einer Photodiodenreihe oder einem Ladungsverschiebe-Element (CCD). Auf diese Weise lassen sich ellipsometrische Meßdaten für eine große Anzahl von Wellenlängen gleichzeitig sammeln und erfassen. Durch die Mehrfachwellenlängen-Ellipsometrie erhöht sich die Anwendbarkeit der Ellipsometrie beträchtlich. Es können hierdurch dicke Schichten gemessen werden, ohne daß Störungen durch Mehrdeutigkeiten der Dickenmessung, welche sich bei monochromatischen Ellipsometern ergeben, auftreten. Brechungsindizes können für alle Dicken gemessen werden, was mit monochromatischen Ellipsometern nicht möglich ist. Schließlich können Mehrfachschichtstrukturen aus den Mehrfachwellenmeßdaten aufgelöst und bestimmt werden.

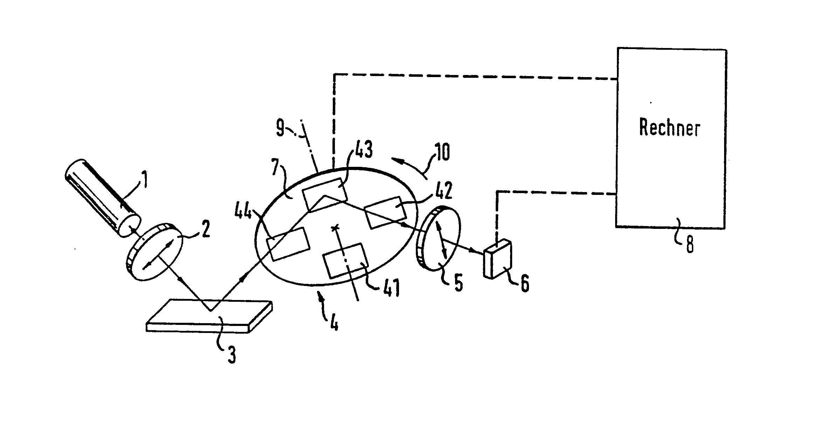

In der beiliegenden Figur ist ein Ausführungsbeispiel der Erfindung dargestellt. Anhand dieser Figur wird die Erfindung noch näher erläutert.

Beim Ausführungsbeispiel wird eine Probe 3 mit durch einen Polarisator 2 polarisiertem Licht, das von einer Lichtquelle 1 ausgesendet wird, an der Oberfläche bestrahlt.

Der reflektierte Strahl, welcher elliptisch polarisiert ist, ist gerichtet auf einen Polarisationsmodulator 4, welcher vier verschiedene Polarisationsmodulatorelemente 41, 42, 43 und 44 aufweist. Die Polarisationsmodulatorelemente 41, 42, 43 und 44 sind ausgebildet als reflektierende Oberflächen, die mit einem dielektrischen Film beschichtet sind. Es können auch mehrere Filme auf jeder reflektierenden Oberfläche vorhanden sein. Es kann sich hierbei um polierte Silikonblättchen handeln, die einen dielektrischen Film, beispielsweise Siliziumdioxid, als Oberflächenbeschichtung aufweisen. Die Polarisationsmodulatorelemente 41, 42, 43, 44 befinden sich auf einem Träger 7, der um eine Achse 9 drehbar ist. Die Achse 9 verläuft senkrecht zu den reflektierenden Oberflächen der Polarisationsmodulatorelemente 41, 42, 43 und 44.

Während der Messung werden die Polarisationsmodulatorelemente durch Drehung des Trägers 7, beispielsweise in Richtung des Pfeiles 10 nacheinander in den Strahlengang des von der Probe 3 reflektierten Lichtes mit elliptischer Polarisation gebracht. Die optischen Schichten, beispielsweise dielektrische Schichten auf den Polarisationsmodulatorelementen sind optisch isotrop und homogen. Diese Schichten unterscheiden sich jedoch untereinander hinsichtlich ihrer Polarisationseigenschaften, beispielsweise besitzen sie unterschiedliche Schichtdicken und/oder Brechungsindizes. Wenn während der Messung der Probe 3 die Polarisationsmodulatorelemente nacheinander in den von der Probe reflektierten Strahlengang mit elliptischer Polarisation gebracht werden, wird der Polarisationszustand dieses reflektierten Strahlengangs unterschiedlich bzw. stufenförmig geändert, wobei der jeweils geänderte Polarisationszustand so lange beibehalten wird, wie der von der Probe 3 reflektierte Strahl auf das jeweilige Polarisationsmodulatorelement auftrifft. Beim dargestellten Ausführungsbeispiel wird beim jeweiligen Wechsel von einem Polarisationsmodulatorelement zum andern eine stufenförmige Änderung der Gangdifferenz zwischen den beiden senkrecht zueinander schwingenden Komponenten des elliptisch polarisierten Lichts, welches von der Probe 3 kommt, vorgenommen.

Das von den jeweiligen Polarisationsmodulatorelementen reflektierte Licht wird durch einen Analysator 5 geleitet und von einem Detektor 6, insbesondere als linearpolarisiertes Licht, empfangen. Der Detektor 6 mißt die Intensitäten, welche den jeweiligen Polarisationsmodulatorelementen 41, 42, 43 und 44 zugeordnet sind. Die Zuordnung erfolgt in einem Rechner 8, in welchem auch die Information eingegeben wird, welches der Polarisationsmodulatorelemente gerade im Strahlengang sich befindet. Im Rechner 8 wird dann auch die jeweilige Auswertung der vom Detektor 6 abgegebenen Meßergebnisse durchgeführt.

## Patentansprüche

1. Ellipsometrisches Verfahren zur Untersuchung der physikalischen Eigenschaften von Proben bzw. Oberflächenschichten von Proben, bei dem

- von einem ersten Polarisator polarisierte Strahlung an der Probe zur Reflexion gebracht oder durch die Probe hindurchgestrahlt wird,
- die von der Probe reflektierte oder durch die Probe hindurchgestrahlte Strahlung in einem zweiten Polarisator, der als Analysator eingesetzt ist erneut polarisiert, gemessen und ausgewertet wird,
- wobei der Polarisationszustand der Strahlung zwischen dem ersten Polarisator und der Probe oder zwischen der Probe und dem zweiten Polarisator geändert wird,
- während des Meßvorgangs an der Probe die Winkeleinstellungen der beiden Polarisatoren fest eingestellt bleiben,
- während des Meßvorgangs zwischen dem ersten Polarisator und der Probe und/oder zwischen der Probe und dem zweiten Polarisator durch stufenweise Änderung zwei oder mehrere diskrete, voneinander unterschiedliche vorbestimmte Polarisationszustände der Strahlung mittels Reflexion an reflektierenden Flächen mit unterschiedlichen optischen Eigenschaften mit einem Einfallswinkel zwischen 0° und 90° eingestellt werden, und
- bei jedem diskreten Polarisationszustand die Intensität der im zweiten Polarisator polarisierten Strahlung jeweils gemessen und zur Bestimmung der Polarisationseigenschaften der Probe bzw. Probenoberfläche in einem Rechner ausgewertet werden.

2. Ellipsometrische Vorrichtung mit einem Polarisator (2), einem Analysator (5), einer im Strahlengang dazwischen angeordneten Probe (3), einer vor dem Polarisator angeordneten Lichtquelle (1), einem nach dem Analysator angeordneten Detektor (6), der das aus dem Analysator kommende Licht empfängt, sowie mit einem Polarisationsmodulator (4) zum Ändern des Polarisationszustandes im Strahlengang zwischen dem Polarisator (2) und der Probe (3) und/oder der Probe und dem Analysator (5), *dadurch gekennzeichnet*, daß der Polarisationsmodulator (4) mehrere Polarisationsmodulatorelemente (41, 42, 43, 44) mit voneinander abgestuften unterschiedlichen vorbestimmten optischen Eigenschaften an räumlich unterschiedlichen Stellen aufweist, die nacheinander in den einen Einfallswinkel zwischen 0° und 90° aufweisenden Strahlengang bewegbar sind und als reflektierende Flächen ausgebildet sind, von denen jede Fläche mit einem homogenen optisch isotropen Medium beschichtet ist und daß die Schichtdicken und/oder Brechungsindizes der optisch isotropen Medien der einzelnen Polarisationsmodulatorelemente voneinander unterschiedlich sind.

3. Vorrichtung nach Anspruch 2, *dadurch gekennzeichnet*, daß die Polarisationsmodulatorelemente (41, 42, 43, 44) jeweils aus Silizium mit polierter reflektierender Oberfläche, die einen dielektrischen Film als homogenes optisches isotropes Medium aufweist, ausgebildet sind.

4. Vorrichtung nach Anspruch 2 oder 3, *dadurch gekennzeichnet*, daß die Polarisationsmodulatorelemente (41, 42, 43, 44) um eine zu den reflektierenden Flächen senkrechte Achse (9) in dem Strahlengang drehbar sind.

5. Vorrichtung nach einem der Ansprüche 2 bis

4, *dadurch gekennzeichnet*, daß die reflektierenden Flächen der Polarisationsmodulatorelemente (41, 42, 43, 44) parallel zueinander liegen.

6. Vorrichtung nach einem der Ansprüche 2 bis 5, *dadurch gekennzeichnet*, daß die reflektierenden Flächen der Polarisationsmodulatorelemente (41, 42, 43, 44) in einer Ebene liegen.

7. Vorrichtung nach Anspruch 2, *dadurch gekennzeichnet*, daß die jeweilige reflektierende Fläche eines jeden Polarisationselementes (41, 42, 43, 44) einfach oder mehrfach beschichtet ist.

8. Vorrichtung nach einem der Ansprüche 2 bis 7, *dadurch gekennzeichnet*, daß in Abhängigkeit von der Bewegung, durch welche die Polarisationsmodulatorelemente (41, 42, 43, 44) in den Strahlengang gebracht werden, die Lichtquelle (1) ein- und ausgeschaltet wird, so daß nur dann, wenn ein Modulatorelement im Strahlengang ist, die Lichtquelle (1) eingeschaltet ist.

9. Vorrichtung nach einem der Ansprüche 2 bis 8, *dadurch gekennzeichnet*, daß zusätzliche Linsen, durchlässige Fenster oder Prismen im Strahlengang zwischen dem Polarisator (2) und der Probe (3) und/oder der Probe (3) und dem Analysator (5) angeordnet sind.

10. Vorrichtung nach einem der Ansprüche 2 bis 9, *dadurch gekennzeichnet*, daß die Wellenlänge des von der Lichtquelle (1) ausgesendeten Lichts veränderbar ist.

11. Vorrichtung nach einem der Ansprüche 2 bis 9, *dadurch gekennzeichnet*, daß die Lichtquelle (1) unterschiedliche Wellenlängen gleichzeitig ausstrahlt.

12. Vorrichtung nach Anspruch 10, *dadurch gekennzeichnet*, daß die einzelnen Wellenlängen dispergiert und von zwei oder mehr Detektoren empfangen werden.

13. Vorrichtung nach einem der Ansprüche 2 bis 6, *dadurch gekennzeichnet*, daß die Lichtquelle (1) in Form von einem oder mehreren Lasern ausgebildet ist.

14. Vorrichtung nach einem der Ansprüche 2 bis 13, *dadurch gekennzeichnet*, daß der Einfallswinkel auf die Probenoberfläche und die reflektierende Fläche des jeweiligen Polarisationsmodulatorelements gleich ist und die Einfallsebenen der auf die Probenfläche und der auf die jeweiligen reflektierenden Flächen gerichteten Strahlen senkrecht zueinander liegen.

15. Vorrichtung nach einem der Ansprüche 2 bis 14, *dadurch gekennzeichnet*, daß der Polarisator (2) und der Analysator (5) Linearpolarisatoren sind, deren Winkeleinstellungen entlang dem Strahlengang senkrecht aufeinanderstehen.

16. Vorrichtung nach einem der Ansprüche 2 bis 15, *dadurch gekennzeichnet*, daß vier Polarisationsmodulatorelemente (41, 42, 43, 44) vorgesehen sind, deren Polarisationseigenschaften so eingestellt sind, daß die Determinante der Matrix die aus den vier Stokes-Vektoren gebildet ist, welche die vier unterschiedlichen Polarisationszustände der den Analysator (5) erreichenden Strahlen für eine Probe (3) darstellen, von Null verschieden ist.

17. Vorrichtung nach einem der ,Ansprüche 2 bis 16, *dadurch gekennzeichnet*, daß der Polarisator (2) und der Analysator (5) als Polarisatoren vom Reflexionstyp ausgebildet sind.

18. Vorrichtung nach Anspruch 2, *dadurch gekennzeichnet*, daß der Einfallswinkel 45° bis 80° beträgt.


**Claims**

1. An ellipsometric method for studying physical properties of testpieces or surface layers of testpieces, wherein

- radiation polarized by a first polarizer is reflected on the testpiece or radiated through the testpiece,
- the radiation reflected by the testpiece or radiated through the testpiece is polarized again, measured and interpreted in a second polarizer which is used as an analyser,
- the state of polarization of the radiation is altered between the first polarizer and the testpiece or between the testpiece and the second polarizer,
- during the measuring operation on the testpiece the angular positions of the two polarizers remain fixed,
- during the measuring operation between the first polarizer and the testpiece and/or between the testpiece and the second polarizer two or more discrete, mutually different, predetermined states of polarization of the radiation are adjusted by stepwise alteration by means of reflection on reflecting surfaces having different optical properties with an angle of incidence between 0° and 90°, and
- in regard to each discrete state of polarization the respective intensity of the radiation polarized in the second polarizer is measured and interpreted in a computer to determine the polarization properties of the testpiece or testpiece surface.

2. An ellipsometric apparatus comprising a polarizer (2), an analyzer (5), a testpiece (3) disposed in the path of the radiation therebetween, a light source (1) disposed before the polarizer, a detector (6) disposed after the analyzer for receiving the light coming from the analyzer, and a polarization modulator (4) for altering the state of polarization in the path of the radiation between the polarizer (2) and the testpiece (3) and/or the testpiece and the analyzer (5), *characterized* in that the polarization modulator (4) comprises a plurality of polarization modulating elements (41, 42, 43, 44) having mutually graduated, different, predetermined optical properties at different places, which are adapted to be moved successively into the path of the radiation with an angle of incidence between 0° and 90° and are formed as reflecting surfaces, each of which has a layer of a homogeneous optically isotropic medium, and in that the layer thicknesses and/or refractive indices of the optically isotropic media of the individual polarization modulating elements differ from each other.

3. The apparatus of claim 2, *characterized* in that each polarization modulating element (41, 42, 43, 44) is formed of silicon having a polished reflecting surface with a dielectric film as the homogeneous optical isotropic medium.

4. The apparatus of claim 2 or 3, *characterized* in that the polarization modulating elements (41, 42, 43, 44) are rotatable in the path of the radiation about an axis (9) normal to the reflective surfaces.

5. The apparatus of any of claims 2 to 4, *characterized* in that the reflective surfaces of the polarization modulating elements (41, 42, 43, 44) are parallel to each another.

6. The apparatus of any of claims 2 to 5, *characterized* in that the reflective surfaces of the polarization modulating elements (41, 42, 43, 44) are disposed on a plane.

7. The apparatus of claim 2, *characterized* in that the reflective surface of each polarization element (41, 42, 43, 44) has a single coating or a plurality of coatings.

8. The apparatus of any of claims 2 to 7, *characterized* in that the light source (1) is switched on and off in accordance with the movement with which the polarization modulating elements (41, 42, 43. 44) are brought into the path of the radiation, so that the light source (1) is switched on only when a modulating element is in the path of the radiation.

9. The apparatus of any of claims 2 to 8, *characterized* in that additional lenses, transparent windows or prisms are disposed in the path of the radiation between the polarizer (2) and the testpiece (3) and/or the testpiece (3) and the analyzer (5).

10. The apparatus of any of claims 2 to 9, *characterized* in that the wavelength of the light emitted by the light source (1) is variable.

11. The apparatus of any of claims 2 to 9, *characterized* in that the light source (1) emits different wavelengths simultaneously.

12. The apparatus of claim 10, *characterized* in that the individual wavelengths are dispersed and received by two or more detectors.

13. The apparatus of any of claims 2 to 6, *characterized* in that the light source (1) is in the form of one or more lasers.

14. The apparatus of any of claims 2 to 13, *characterized* in that the angle of incidence on the testpiece surface and the reflecting surface of the particular polarization modulating element is the same and the planes of incidence of the beams directed to the testpiece surface and to the particular reflecting surfaces are normal to each another.

15. The apparatus of any of claims 2 to 14, *characterized* in that the polarizer (2) and the analyzer (5) are linear polarizers whose angular positions along the path of the radiation are normal to each other.

16. The apparatus of any of claims 2 to 15, *characterized* in that four polarization modulating elements (41, 42, 43, 44) are provided whose polarization properties are such that the determinant of the matrix which is formed from the four Stokes vectors representing the four different states of polarization of the beams reaching the analyzer (5) for a testpiece (3) is other than zero.

17. The apparatus of any of claims 2 to 16, *characterized* in that the polarizer (2) and the analyzer (5) are formed as reflection type polarizers.

18. The apparatus of claim 2, *characterized* in that the angle of incidence is 45° to 80°.

## Revendications

1. Procédé ellipsométrique pour l'étude des propriétés physiques d'échantillons ou des couches superficielles d'échantillons dans lequel

- un rayonnement polarisé par un premier polariseur est réfléchi sur l'échantillon ou traverse l'échantillon,
- le rayonnement réfléchi par l'échantillon ou ayant traversé l'échantillon est de nouveau polarisé dans un second polariseur qui est utilisé comme analyseur, mesuré et analysé,
- l'état de polarisation du rayonnement étant modifié entre le premier polariseur et l'échantillon ou entre l'échantillon et le second polariseur, caractérisé en ce que
- pendant le mesurage sur l'échantillon, les ajustages angulaires des deux polariseurs restent fixes,
- pendant le mesurage entre le premier polariseur et l'échantillon et/ou entre l'échantillon et le second polariseur, deux ou plusieurs états de polarisation discrets du rayonnement, prédéterminés et différents les uns des autres, sont ajustés par variation graduelle au moyen de la réflexion sur des surfaces réfléchissantes aux propriétés optiques différentes, avec un angle d'incidence entre 0° et 90°, et
- à chaque état de polarisation discret, l'intensité du rayonnement polarisé dans le second polariseur est mesurée et analysée dans un ordinateur pour déterminer les propriétés de polarisation de l'échantillon ou de la surface de l'échantillon.

2. Appareil ellipsométrique comportant un polariseur (2), un analyseur (5), un échantillon (3) disposé entre ceux-ci dans la trajectoire des rayons, une source de lumière (1) prévue devant le polariseur, un détecteur (6) prévu après l'analyseur qui reçoit la lumière venant de l'analyseur, ainsi qu'un modulateur de polarisation (4) permettant de varier l'état de polarisation dans la trajectoire des rayons entre le polariseur (2) et l'échantillon (3) et/ou l'échantillon et l'analyseur (5), *caractérisé en ce que* le modulateur de polarisation (4) présente plusieurs éléments de modulateur de polarisation (41, 42, 43, 44) qui ont des propriétés optiques prédéterminées différentes et graduelles, en des endroits différents qui sont successivement mobiles dans la trajectoire des rayons présentant un angle d'incidence compris entre 0° et 90° et qui sont conçus comme des surfaces réfléchissantes dont chaque surface est recouverte d'un milieu isotrope optique homogène et en ce que les épaisseurs des couches et/ou les indices de réfraction des milieux isotropes optiques des différentes éléments de modulateur de polarisation sont différents les uns des autres.

3. Appareil selon la revendication 2, *caractérisé en ce que* chacun des éléments de modulateur de polarisation (41, 42, 43, 44) est formé de silicium è surface polie réfléchissante présentant un film diélectrique comme milieu isotrope optique homogène.

4. Appareil selon le revendication 2 ou 3, *caractérisé en ce que* les éléments de modulateur de polarisation (41, 42, 43, 44) sont pivotants autour d'un axe (9) perpendiculaire aux surfaces réfléchissantes dans la trajectoire des rayons.

5. Appareil selon l'une des revendications 2 à 4, *caractérisé en ce que* les surfaces réfléchissantes des éléments de modulateur de polarisation (41, 42, 43, 44) sont parallèles les unes aux autres.

6. Appareil selon l'une des revendications 2 à 5, *caractérisé en ce que* les surfaces réfléchissantes des éléments de modulateur de polarisation (41, 42, 43, 44) sont situées dans un plan.

7. Appareil selon la revendication 2, *caractérisé en ce que* la surface réfléchissante de chaque élément de modulateur de polarisation (41, 42, 43, 44) est recouverte d'une ou de plusieurs couches.

8. Appareil selon l'une des revendications 2 à 7, *caractérisé en ce que* la source de lumière (1) est allumée et éteinte en fonction du mouvement avec lequel les éléments de modulateur de polarisation (41, 42, 43, 44) sont déplacés dans la trajectoire des rayons, de sorte que la source de lumière n'est allumée que si un élément du modulateur se trouve dans la trajectoire des rayons.

9. Appareil selon l'une des revendications 2 à 8, *caractérisé en ce que* des lentilles supplémentaires, des fenêtres transparentes ou des prismes sont prévus dans la trajectoire des rayons entre le polariseur (2) et l'échantillon (3) et/ou l'échantillon (3) et l'analyseur (5).

10. Appareil selon l'une des revendications 2 à 9, *caractérisé en ce que* la longueur d'onde de la lumière émise par la source de lumière (1) est variable.

11. Appareil selon l'une des revendications 2 à 9, *caractérisé en ce que* la source de lumière (1) émet simultanément des longueurs d'ondes différentes.

12. Appareil selon l'une des revendications 2 à 7, *caractérisé en ce que* les différentes longueurs d'ondes sont dispersées et reçues par deux détecteurs ou plus.

13. Appareil selon l'une des revendications 2 à 6, *caractérisé en ce que* la source de lumière (1) est formée par un ou plusieurs lasers.

14. Appareil selon l'une des revendications 2 à 13, *caractérisé en ce que* l'angle d'incidence sur la surface de l'échantillon et sur la surface réfléchissante de l'élément correspondant du modulateur de polarisation est le même et que les plans d'incidence des rayons dirigés sur la surface de l'échantillon et des rayons dirigés sur les surfaces réfléchissantes correspondantes sont perpendiculaires les uns aux autres.

15. Appareil selon l'une des revendications 2 à 14, *caractérisé en ce que* le polariseur (2) et l'analyseur (5) sont des polariseurs rectilignes dont les ajustages angulaires le long de la trajectoire du rayon sont perpendiculaires.

16. Appareil selon l'une des revendications 2 à 15, *caractérisé en ce qu'*il est prévu quatre éléments de modulateur de polarisation (41, 42, 43, 44) dont les propriétés de polarisation sont réglées de telle sorte que le déterminant de la matrice, formé à partir des quatre vecteurs de Stokes qui représentent les quatre états de polarisation différents des rayons atteignant l'analyseur (5) pour un échantillon (3), est différent de zéro.

17. Appareil selon l'une des revendications 2 à 16, *caractérisé en ce que* le polariseur (2) et l'analyseur (5) sont conçus comme polariseurs du type à réfléxion.

18. Appareil selon la revendication, *caractérisé en ce que* l'angle d'incidence est de 45° à 80°.

Rechner